# EUROPEAN PATENT SPECIFICATION

(11) **EP 3 321 730 B1**
(45) Date of publication and mention of the grant of the patent: **24.03.2021**
(21) Application number: 15851623.7
(22) Date of filing: 22.12.2015
(51) Int. Cl.: G02F 1/1343, G02F 1/1362, G02F 1/1335, G02F 1/1337

(54) **ARRAY SUBSTRATE AND MANUFACTURING METHOD THEREOF AND DISPLAY DEVICE**
ARRAYSUBSTRAT UND HERSTELLUNGSVERFAHREN DAFÜR SOWIE ANZEIGEVORRICHTUNG
SUBSTRAT DE RÉSEAU ET PROCÉDÉ DE FABRICATION DE CELUI-CI, ET DISPOSITIF D'AFFICHAGE

(30) Priority: 09.07.2015 CN 201510400851
(43) Date of publication of application: 16.05.2018
(73) Proprietor: BOE Technology Group Co., Ltd., Beijing 100015 (CN); Beijing BOE Optoelectronics Technology Co., Ltd., Beijing 100176 (CN)
(72) Inventor: JIANG, Wenbo, Beijing 100176 (CN); HAN, Shuai, Beijing 100176 (CN); WANG, Shijun, Beijing 100176 (CN); LV, Zhenhua, Beijing 100176 (CN)
(74) Representative: Brötz, Helmut
(86) International application number: PCT/CN2015/098269
(87) International publication number: WO 2017/004948

(56) References cited:
- CN-A- 102 629 606
- CN-A- 103 488 004
- CN-A- 103 941 488
- CN-A- 104 007 589
- CN-A- 104 516 167
- CN-A- 104 597 671
- CN-A- 104 898 335
- KR-B1- 100 919 192
- US-A1- 2002 180 920
- US-A1- 2009 073 365
- US-A1- 2010 007 837
- US-A1- 2012 050 643

## Description

### TECHNICAL FIELD

At least one embodiment of present disclosure relates to an array substrate, a manufacturing method of the same, and a display device.

### BACKGROUND

Liquid crystal displays have the advantages of low power consumption, large display information, easy color display realization, no radiation, no pollution and so on, and thus are widely used.

A liquid crystal display includes an array substrate and an opposite substrate (such as a color filter substrate) which are opposite to each other, and a liquid crystal layer disposed between the array substrate and the opposite substrate, controls the rotation of liquid crystal modules by applying a voltage to a common electrode and a pixel electrode and thus controls light. In-plane switching (IPS) mode and advanced-super dimensional switching (ADS) mode liquid crystal displays are two main horizontal electric field type liquid crystal displays.

In an ADS mode liquid crystal display, the pixel electrode and the common electrode are respectively disposed in different layers of the array substrate, and by the electric field generated by edges of slit electrodes in a same plane and the electric field generated between a slit electrode layer and a plate-like electrode layer, a multi-dimensional electric field is formed, so that the liquid crystal molecules between the slit electrodes and right above the slit electrodes and in all alignment directions in the liquid crystal cell can produce rotation.

In an IPS mode liquid crystal display, the pixel electrode and the common electrode are arranged in a same layer of the array substrate, and by controlling the rotation, in a plane, of liquid crystal molecules, brightness control is achieved.
CN 104597671A discloses an array substrate having a first signal line extending along a first direction, wherein the first signal line is a gate line or a data line. A common electrode is arranged on the first signal line. At least one first opening is arranged in the common electrode and overlaps an orthographic projection, on a plane where the common electrode is located, of the first signal line. The common electrode comprises a first portion which partially overlaps the orthographic projection of the first signal line and a second portion which is arranged outside the orthographic projection of the first signal line and connected to the first portion. The second portion and the first portion are disposed in a same layer. US 2012/0050643 A1 discloses an array substrate, a liquid crystal panel and a liquid crystal display. US 2010/0007837 A1 refers to an array substrate and a liquid crystal display apparatus having the same. From US 2009/0073365 A1 it is known a liquid crystal display device.

### SUMMARY

At least one embodiment of the present disclosure provides an array substrate, a manufacturing method of the same, and a display device, to reduce the defect of color cross-talk which is caused by alignment or the like and generated at two sides of a data line or a gate line.

At least one embodiment of the present disclosure provides an array substrate, which includes a first signal line extending along a first direction and a common electrode; the first signal line is a gate line or a data line; the common electrode is arranged on the first signal line, at least one first opening is arranged in the common electrode and overlaps an orthographic projection, on a plane where the common electrode is located, of the first signal line; and the common electrode includes a first portion which partially overlaps the orthographic projection of the first signal line and a second portion which is arranged outside the orthographic projection of the first signal line and connected to the first portion, and the second portion and the first portion are disposed in a same layer, wherein the first opening comprises at least one edge extending along the first direction and the edge is in a shape of zigzag line or a wavy line.

At least one embodiment of the present disclosure further provides a display device which includes the array substrate.

At least one embodiment of the present disclosure further provides a manufacturing method of an array substrate, and the method includes: forming a first signal line extending along a first direction with the first line being a gate line or a data line; and forming a common electrode on the first signal line and at least one first opening in the common electrode through one patterning process, so that the at least one first opening overlaps an orthographic projection, on a plane where the common electrode is located, of the first signal line; and the common electrode includes a first portion which partially overlaps the orthographic projection of the first signal line and a second portion which is arranged outside the orthographic projection of the first signal line and connected to the first portion, and the second portion and the first portion are disposed in a same layer, wherein the first opening comprises at least one edge extending along the first direction and the edge is in a shape of zigzag line or a wavy line.

### BRIEF DESCRIPTION OF THE DRAWINGS

In order to clearly illustrate the technical solution of the embodiments of the disclosure, the drawings of the embodiments will be briefly described in the following; it is obvious that the described drawings are only related to some embodiments of the disclosure and thus are not limitative of the disclosure.
FIG.1 is a partial cross-sectional view schematically illustrating an ADS mode array substrate;
FIG.2a is a top view schematically illustrating a data line, a common electrode and a pixel electrode of an array substrate;
FIG.2b is a schematic cross-sectional view taken along a direction AA' of FIG.2a;
FIG.2c is a view schematically illustrating a principle of color cross-talk generated in a situation where a black matrix and a data line are shift from each other in alignment;
FIG.3a is a partial cross-sectional view schematically illustrating an ADS array substrate useful for understanding the present invention
FIG.3b is a schematic top view illustrating that a common electrode is provided with a first opening at a position corresponding to a first signal line in an ADS mode array substrate useful for understanding the present invention;
FIG.4a is a schematic cross-sectional view taken along a direction AA' in FIG.3b;
FIG.4b is a schematic cross-sectional view taken along a BB' direction in FIG.3b;
FIG.5 is a schematic view illustrating a principle of avoiding color cross-talk between pixels at both sides of a data line in an array substrate useful for understanding the present invention ;
FIG.6 is a schematic top view illustrating that at least one edge of a first opening is in a shape of a zigzag line, in an array substrate provided by an embodiment of the present disclosure;
FIG.7 is a schematic top view illustrating that a common electrode is provided with a first opening and a second opening respectively at positions corresponding to a first signal line and a second signal line, in an array substrate provided by an embodiment of the present disclosure;
FIG.8 is a schematic view illustrating a structure of gate lines and data lines in an array substrate;
FIG.9 is a schematic top view illustrating that an array substrate provided by an embodiment of the present disclosure includes a color filter layer;
FIG.10a is a partial cross-scctional view schematically illustrating an IPS mode array substrate provided by an embodiment of the present disclosure;
FIG.10b is a schematic top view illustrating that a common electrode is provided with a first opening at a position corresponding to a first signal line, in an IPS mode array substrate provided by an embodiment of the present disclosure;
FIG.11 is sectional schematic view taken along a direction AA' in FIG.10b; and
FIG.12 is a sectional view schematically illustrating a display device provided by an embodiment of the present disclosure.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. Also, the terms such as "a," "an," etc., are not intended to limit the amount, but indicate the existence of at least one. The terms "include," "including," "comprise," "comprising," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

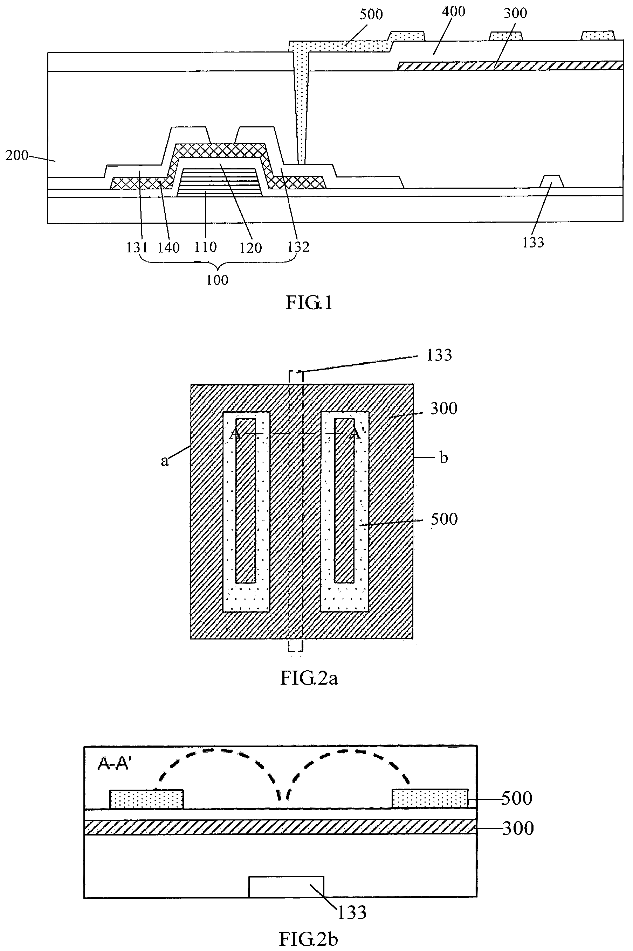

FIG.1 is a partial sectional view schematically illustrating an ADS mode array substrate. As illustrated in FIG.1, a thin film transistor 100, a first insulating layer 200, a common electrode 300, a second insulating layer 400 and a pixel electrode 500 are sequentially arranged on a base substrate. Description is given in connection with FIG.1 by taking the example that the thin film transistor 100 has a bottom-gate top-contact structure, i.e., the thin film transistor 100 includes a gate 110, a gate insulating layer 120 disposed on the gate electrode 110, an active layer 140 disposed on the gate insulating layer 120, and a source electrode 131 and a drain electrode 132 disposed on the active layer 140 and contacting the active layer 140 respectively.

For example, the manufacturing process of the array substrate illustrated in FIG.1 may include the following steps 1 to 8.
Step 1: by a first patterning process (i.e., a process of forming a preset pattern), the gate electrode 110 and a plurality of gate lines (not shown in FIG.1) are formed on a base substrate.
Step 2: by a second patterning process, the gate insulating layer 120 covering the gate electrode 110 and the gate lines is formed.
Step 3: by a third patterning process, the active layer 140 is formed on the gate insulating layer 120.
Step 4: by a fourth patterning process, the source electrode 131 and the drain electrode 132 are formed on the active layer 140 and contact the active layer 140 respectively, and a plurality of data lines 133 are formed.
Step 5: by a fifth patterning process, the first insulating layer 200 is formed to cover the source electrode 131 and the drain electrode 132, and a first insulating layer via hole located in the first insulating layer 200 is formed.
Step 6: by a sixth patterning process, the common electrode 300 and a common electrode line (not shown in FIG.1) connecting the common electrode 300 are formed on the first insulating layer 200.
Step 7: by a seventh patterning process, the second insulating layer 400 and a second insulating layer via hole in the second insulating layer 400 are formed, and the second insulating layer via hole is in communication with the first insulating layer via hole.
Step 8: by an eighth patterning process, the pixel electrode 500 is formed on the second insulating layer 400, so that the pixel electrode 500 is connected with the drain electrode 132 of the thin film transistor 100 through both the first insulating layer via hole and the second insulating layer via hole which are formed respectively in the above steps 5 and 7.

A liquid crystal display is provided with a black matrix (BM) therein, for example, the black matrix corresponds to the gate lines and the data lines on the array substrate. In research, the inventors of the present application have noted that the formed black matrix is narrow in a current high PPI (pixels per inch) product due to the need of increasing aperture ratio, but at present the equipment for aligning the gate lines / data lines with the black matrix has a limited alignment capacity, and this may result in alignment deviation which brings about the color cross-talk.

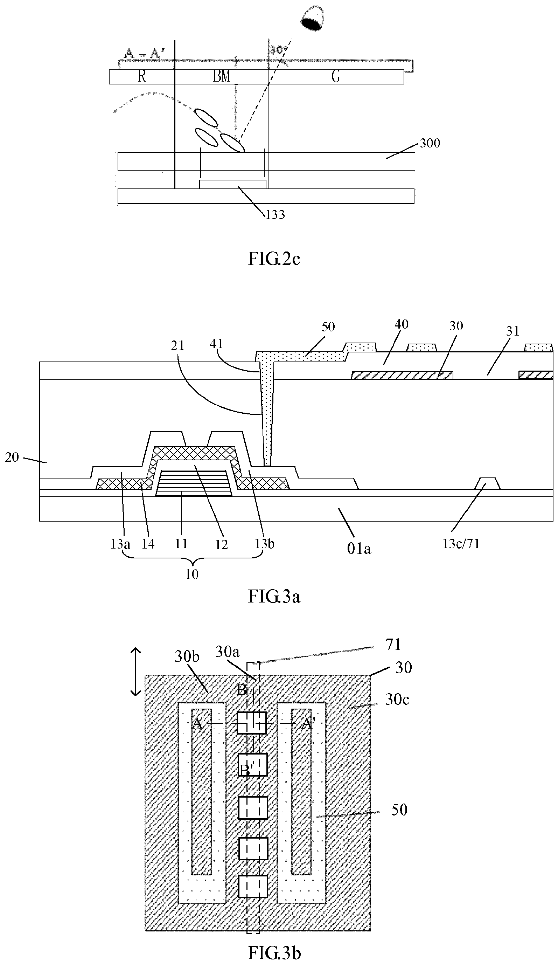

FIG.2a is a schematic top view schematically illustrating the data line, the common electrode and the pixel electrode which are provided on the array substrate. As illustrated in FIG.2a, the common electrode 300 may be a plate-like electrode disposed on the data line 133, the pixel electrode 500 disposed on the common electrode 300 is a slit electrode, and an electric field is formed between the pixel electrode 500 and the common electrode 300 to drive liquid crystals to modulate light. The electric field along a direction AA' in FIG.2a and above the data line 133 is illustrated as the dotted line in FIG.2b; a pixel "a" and a pixel "b" are respectively one two sides of the data line 133. It is assumed that after the array substrate and an opposed substrate are assembled to form a liquid crystal display, the pixel "a" corresponds to a red filter pattern R, the pixel "b" corresponds to a green filter pattern G, as illustrated in FIG.2c, in a situation where the black matrix in the liquid crystal display is deviated to the left (i.e., to the location of pixel a), light transmitted by the pixel "a" can be viewed from the filter pattern corresponding to the pixel "b" at a side viewing angle, or vice versa. If the equipment causes the alignment accuracy for the black matrix and the data line to reach the limit thereto, it is to be optimized in the design.

At least one embodiment of the present disclosure provides an array substrate, a manufacturing method of the array substrate and a display device. The array substrate includes a first signal line extending along a first direction and a common electrode arranged on the first signal line; the first signal line is a gate line or a data line; at least one first opening is arranged in the common electrode and overlaps an orthographic projection, on a plane where the common electrode is located, of the first signal line; and the common electrode includes a first portion which partially overlaps the orthographic projection of the first signal line and a second portion which is arranged outside the orthographic projection of the first signal line and connected to the first portion, and the second portion and the first portion are disposed in a same layer. In the embodiment of the present disclosure, for example, by forming at least one first opening in the common electrode over the data line or the gate line, arrangement of liquid crystals between pixels respectively disposed on two sides of the data line or gate line become disordered, so that the liquid crystals cannot allow light to pass therethrough and have a function of adding an equivalent part to the black matrix, and thus the color cross-talk defect caused by alignment or the like and generated on two sides of the data line or the gate line can be reduced.

In connection with the drawings and specific implementations, the array substrate and its manufacturing method and the display device provided by embodiments of the present disclosure will be described below. Example useful for understanding the Invention

As illustrated in FIG.3a and FIG.3b, the array substrate provided by the example includes a first signal line 71 (for example, a data line 13c, as illustrated in FIG.3a) extending along a first direction (as shown by the arrow in FIG.3b), and a common electrode 30 arranged on the first signal line (namely at a side, away from a base substrate 01a, of the first signal line 71); at least one first opening 31 is arranged in the common electrode 30 and each first opening 31 overlaps an orthographic projection, on a plane where the common electrode 30 is located, of the first signal line 71, namely each first opening 31 overlaps the first signal line 71 vertically.

As illustrated in FIG.3b, the common electrode 30 includes a first portion 30a which partially overlaps the orthographic projection of the first signal line 71 and a second portion 30b which is arranged outside the orthographic projection of the first signal line 71 and connected to the first portion 30a, and the second portion 30b and the first portion 30a are disposed in a same layer. That is, the common electrode 30 corresponding to the first signal line 71 includes the first portion 30a and the second portion 30b which are formed integrally.

The example is described by taking the pixel electrode 50 and the common electrode layer 30 being arranged in different layers as an example. For example, the array substrate of the present embodiment may be an ADS mode array substrate. In this case, the pixel electrode 50 may be a slit electrode and be located on the common electrode 30, as illustrated in FIGS. 3a and 3b, and the common electrode 30 is a plate-like structure. In this case, the array substrate provided in the embodiment may include a common electrode 30 on the overall surface; or the array substrate may also include a plurality of plate-like common electrodes 30, and each common electrode 30 includes a first portion 30a and a second portion 30b. Alternatively, for example, the common electrode may be a slit electrode and be located on the plate-like pixel electrode.

The array substrate of the example is also provided with a thin film transistor 10. FIG.3a takes that the thin film transistor 10 has a bottom-gate top-contact structure as an example for description, i.e., the thin film transistor 10 includes a gate electrode 11, a gate insulating layer 12 disposed on the gate electrode 11, an active layer 14 disposed on the gate insulating layer 12, and a source electrode 13a and a drain electrode 13b which are located on the active layer 14 and in contact with the active layer 14. A pixel electrode 50 is connected to the drain electrode 13b through both a first insulating layer via hole 21 in a first insulating layer 20 and a via hole 41 in a second insulating layer 40. Of course, the thin film transistor 10 may adopt a top-gate structure, i.e., the gate electrode 11 is disposed on the active layer 14; alternatively, the thin film transistor 10 may employ a bottom-contact structure, i.e., the source electrode 13a and the drain electrode 13b are disposed below the active layer 14; moreover, an insulating layer can also be arranged between the source electrode 13a / the drain electrode 13b and the active layer 14, and the source electrode 13a and drain electrode 13b can contact the active layer 14 through a via hole in the insulating layer.

In the array substrate provided by the example the first signal line 71 can also be a gate line, and the gate line and the gate electrode 11 can be arranged in a same layer. FIG.3a takes the case that the first signal line 71 is a data line 13c which is disposed in a same layer as the source electrode 13a and the drain electrode 13b as an example for description.

In the example, at least one first opening 31 is arranged at a position, corresponding to the first signal line 71, of the common electrode 30, the common electrode 30 at the position of the edge of each first opening 31 and the first signal line 71 below the first opening 31 form an electric field which is an irregular electric field, so that the liquid crystals at the first opening 31 are arranged in disorder, does not have the light-transmitting ability, and form the so-called "dark zone."

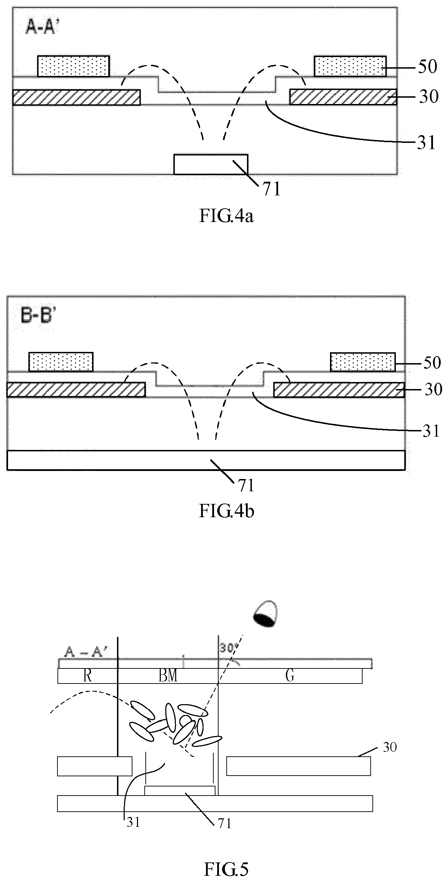

FIG.4a is a schematic sectional view along the direction AA' in FIG.3b, and FIG.4b is a schematic sectional view along the direction BB' in FIG.3b. As illustrated in FIG.4a and 4b, along the direction AA', a transverse electric field is formed between the common electrode 30 and the first signal line 71; and along the direction BB', a longitudinal electric field is formed between the common electrode 30 and the signal line 71. Thus, the electric fields at each first opening 31 have different directions, so that the liquid crystals are arranged in disorder here and form a dark region. This is equivalent that a three-dimensional barrier is formed in the liquid crystal cell to separate pixels arranged respectively at two sides of the first signal line, so that the light transmitted by the pixels does not interfere with each other, and thus the color cross-talk defect which occurs upon viewing at a side viewing angle can be avoided to a maximum extent.

It is to be noted that FIG.3b only takes the case that the first opening 31 has a rectangular shape in the plane where the common electrode 30 is located as an example for description. In a situation where the first opening 31 has another shape in the plane where the common electrode 30 is located, the electric fields formed between the common electrode 30 and the first signal line 71 may also be in other directions. Further, the shape of the first opening may be any shape. For example, the shape of the first opening 31 in the plane where the common electrode 30 is located may include a polygon (e.g., a triangle, rectangle, etc.), a circle or an ellipse. Of course, the polygon, circle or ellipse herein may be a pattern which is approximate to a polygon, a circle or an ellipse.

As illustrated in FIG.5, after the array substrate of the example is assembled into a liquid crystal display device, pixels respectively at a first side and a second side of the first signal line 71 correspond to filter patterns of different colors (e.g., a red filter pattern R and a green filter pattern G). In a situation where the black matrix BM corresponds to the first signal line 71 is deviated to the first side of the first signal line 71 (i.e., the left side of the first signal line 71 in FIG.5), due to that the common electrode 30 is formed with at least one first opening 31 therein, and therefore, it is difficult to watch the light from the first side at the second side of the first signal line 71 (i.e., the right side of the first signal line 71 in FIG.5).

Because the first opening 31 is formed in the common electrode 31, for example, by removing the common electrode material at a preset position in manufacturing the common electrode 30, the first opening 31 is formed at the position, and thus the first opening 31 can be a closed opening.

In order to form a dark zone at each first opening 31, it is better that the size, along the first direction, of each first opening 31 is not too large. For example, the common electrode 30 may be provided with a plurality of the first openings 31 therein. Thus, a portion, corresponding to the first signal line 71, of the common electrode 30 is divided by the plurality of first openings, the more the number of the first openings, the size, along the first direction, of each first opening may be smaller, and this contributes to the disordered arrangement of liquid crystals at the position of each first opening to form a dark zone.

It is to be noted that, the number of the first opening(s) (especially in a situation where the common electrode at the position corresponding to the first signal line is provided with one first opening or a small quantity of first openings) may be selected according to the liquid crystal material and the size, along the first direction, of the portion, corresponding to the first signal line, of the common electrode and the like in a practical situation, to prevent the first opening of a too large size along the first direction from causing a non-noticeable dark region between the common electrode at the position of the first opening and the first signal line. The example does not limit the number and size of the first opening, as long as electric fields at different directions are formed between the common electrode at each first opening and the first signal line below the first opening, to form a dark zone at the first opening.

For example, the size, along the first direction, of the first opening 31 can be smaller than or equal to the size, along a direction perpendicular to the first direction, of the first opening 31. This can prevent the first opening of a too large size along the first direction from causing a relatively regular electric field between the common electrode at the first opening and the first signal line.

For example, the first opening 31 can be axisymmetric with respect to the first signal line 71, as illustrated in FIG.3b. This renders the light at the two sides of the first signal line 71 more uniform.

In the example the common electrode 30 may also include a third portion 30c located outside the orthographic projection of the first signal line 71, as shown in FIG.3b, the third portion 30c connects the first portion 30a and is disposed in a same layer as the first portion 30a, and the third portion 30c and the second portion 30b are located at opposite sides of the first portion 30a respectively. That is, the common electrode 30 corresponding to the first signal line 71 includes the first portion 30a, the second portion 30b and the third portion 30c which are integrally formed, and the second portion 30b and the third portion 30c are respectively located at a first side and a second side of the signal line 71.

### First Embodiment

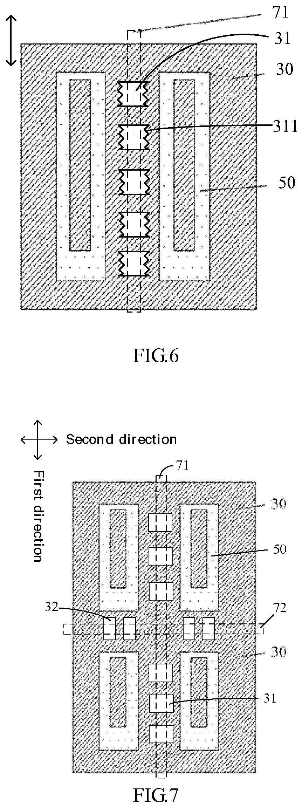

As illustrated in FIG.6, the array substrate of the present embodiment differs from the example useful for understanding the invention mainly in that: at least one first opening 31 includes at least an edge 311 substantially extending along the first direction, and the edge 311 may be a zigzag edge (as illustrated in FIG.6) or a wavy edge.

By allowing the edge, extending substantially along the first direction, of the first opening to have a non-linear structure, a relatively disordered electric field can be formed as much as possible between the edge 311 of the common electrode 30 at the first opening 31 and the first signal line 71.

### Second Embodiment

Compared with the first embodiment, the array substrate of the present embodiment further includes a second signal line 72 extending along a second direction which intersects the first direction; and as illustrated in FIG.7, at least one second opening 32 is further arranged in the common electrode 30 and overlaps an orthographic projection, on the plane where the common electrode 30 is located, of the second signal line 72, namely each second opening 32 overlaps the second signal line 72 vertically.

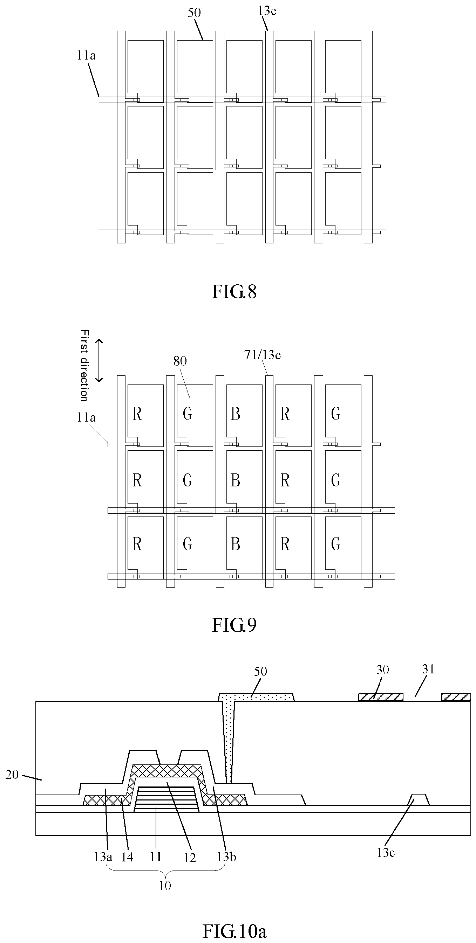

In the present embodiment, for example, as illustrated in FIG.8, it is possible that the first signal line 71 is a gate line 11a, and the second line 72 is a data line 13c; or the first signal line 71 is a data line 13c, and the second signal line 72 is a gate line 11a.

### Third Embodiment

The array substrate provided by the present embodiment differs from that in the first embodiment mainly in that: the array substrate further includes a color filter layer, namely the array substrate adopts a COA (color filter on array) technology.

For example, as illustrated in FIG.9, the color filter layer 80 includes a plurality of filter pattern (for example, red filter patterns R, Green filter patterns G and blue filter patterns B) columns, filter patterns of each filter pattern column are arranged along the first direction, filter patterns of a same filter pattern column may be in a same color or in different colors, and in two filter pattern columns arranged respectively at two sides of the first signal line 71, filter patterns which are adjacent to the first signal line 71 and respectively at positions corresponding to each other are in different colors.

It is to be noted that, FIG.9 illustrates the example in which the first signal line 71 is a data line, the two adjacent columns of filter patterns respectively at the two sides of the data line 13c are in different colors, and the two adjacent rows of filter patterns respectively at the two sides of the gate line 11a are in a same color. The filter patterns that the color filter layer includes can also adopt other arrangements generally used in this field, and detailed descriptions are omitted herein.

### Fourth Embodiment

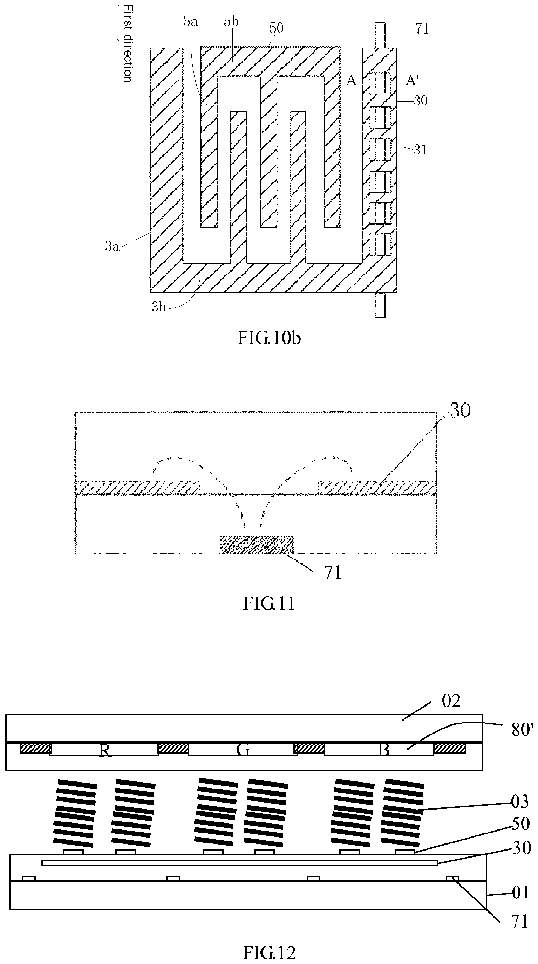

The array substrate provided by the present embodiment differs from the first embodiment mainly in that: as illustrated in FIG.10a and FIG. 10b, in the present embodiment, a pixel electrode 50 and a common electrode 30 are arranged in a same layer, in this case, the common electrode 30 can include a plurality of strip common sub-electrodes 3a, and the pixel electrode 50 can include a plurality of strip pixel sub-electrodes 5a which are alternated with the strip common sub-electrodes 3a. Namely, the array substrate provided by the present embodiment is an IPS mode array substrate.

For example, in FIG.10b, the strip pixel sub-electrodes 5a of the pixel electrode 50 extend substantially along the first direction, and are connected together by a connection portion 5b. Similarly, the strip common sub-electrodes 3a of the common electrode 30 extend substantially along the first direction, and are connected together by a connection portion 3b. The strip common sub-electrodes 3a of the common electrode 30 can have the sizes along the first direction and / or sizes along the direction perpendicular to the first direction to be different from each other; in order to realize that at least one first opening 31 is formed between the common electrode 30 and the first signal line 71, the first opening 31 may be provided in a common sub-electrode 3a with a larger size along the direction perpendicular to the first direction, and in this case, the electric field along the AA' direction formed between the common sub-electrode 3a at the first opening 31 between the first signal line 71 is illustrated in FIG.11.

The array substrate provided by the present embodiment can further be provided with a thin film transistor 10 which can be referred to the related descriptions in the first embodiment, and repeated descriptions are omitted herein.

Among the above first to fifth embodiments, the first embodiment or the fifth embodiment can be combined with at least one of the second embodiment to the fourth embodiment. Regarding the above first to fifth embodiments and their possible combinations only those embodiments and combinations of embodiments are part of the claimed invention which are in accordance to at least one of the independent claims. The remaining embodiments and combinations of embodiments are helpful to understand the invention.

### Fifth Embodiment

The present embodiment provides a display device which includes the array substrate provided by any one of the above embodiments or any combination thereof.

For example, the display device of the present embodiment may be a liquid crystal panel, an electronic paper, a touch panel, a mobile phone, a tablet computer, a television, a monitor, a notebook computer, a digital photo frame, a navigation or any other product or component having a display function.

For example, as illustrated in FIG. 12, the display device provided by the present embodiment can be a liquid crystal display including an array substrate 01 and an opposite substrate 02 which are opposite to each other, and a liquid crystal layer 03 disposed between the array substrate 01 and the opposite substrate 02.

For example, the display device of the present embodiment can further include a color filter layer 80', for example, the color filter layer 80' includes a plurality of filter pattern (for example, red filter patterns R, green filter patterns G, and blue filter patterns B) columns, filter patterns of each filter pattern column are arranged along the first direction, filter patterns of a same filter pattern column are in a same color or in different colors, and in two filter pattern columns which are arranged respectively at two sides of the first signal line 71, filter patterns adjacent to the first signal line 71 and respectively at corresponding positions in same rows are in different colors.

For example, the color filter layer may be provided on the array substrate 01 or the opposite substrate 02. FIG.12 takes the color filter layer 80' disposed on the opposite substrate 02 as an example for description, and in this case, the opposite substrate 02 can be referred to as a color filter substrate.

The color filter layer in the present embodiment can be arranged by referring to the related descriptions in the above fourth embodiment and repeated descriptions are omitted herein.

### Sixth Embodiment

The present embodiment provides a manufacturing method of the array substrate provided by any one of the above embodiments or any combination thereof and the method can include: forming a first signal line extending along a first direction; and forming a common electrode on the first signal line and at least one first opening in the common electrode through one patterning process, so that the at least one first opening overlaps an orthographic projection, on a plane where the common electrode is located, of the first signal line. In the method provided by the present embodiment, the common electrode includes a first portion which partially overlaps the orthographic projection of the first signal line and a second portion which is arranged outside the orthographic projection of the first signal line and connected to the first portion, and the second portion and the first portion are disposed in a same layer. Besides, the first line is a gate line or a data line.

For example, the manufacturing method provided by the present embodiment can further include, before or after forming the first signal line, forming a second signal line extending along a second direction which intersects the first direction; and forming the common electrode can further include forming at least one second opening in the common electrode, and the at least one second opening overlaps an orthographic projection, on the plane where the common electrode is located, of the second signal line.

For example, in the manufacturing method, a pixel electrode can be formed through a patterning process different from that for forming the common electrode, and in this case, the pixel electrode can be arranged on or below the common electrode. For example, the array substrate can adopt an ADS mode.

Alternatively, for example, the common electrode can be further formed along a pixel electrode. In this case, the common electrode can include a plurality of strip common sub-electrodes, and the pixel electrode can include a plurality of strip pixel sub-electrodes which are alternated with the strip common sub-electrodes, namely the array substrate adopts an IPS mode.

With respect to the ADS mode array substrate illustrated by FIG.3a, the manufacturing method of the present embodiment will be described in detail below. For example, the manufacturing method may include step 71 to step 78.
Step 71: by a first patterning process, a gate electrode 11 and a gate line (not shown in FIG.3a) are formed on the substrate 01a.
Step 72: by a second patterning process, a gate insulating layer 12 is formed to cover the gate electrode 11 and the gate line.
Step 73: by a third patterning process, an active layer 14 is formed on the gate insulating layer 12.
Step 74: by a fourth patterning process, a source electrode 13a and a drain electrode 13b are formed on the active layer 14 and contact the active layer 14, and a data line 13c are formed.
Step 75: by a fifth patterning process, a first insulating layer 20 is formed to cover the source electrode 13a, the drain electrode 13b and the data lines 13c, and a first insulating layer via hole 21 in the first insulating layer 20 is formed.
Step 76: by a sixth patterning process, a common electrode 30 is formed on the first insulating layer 20, and at least one first opening 31 located in the common electrode 30 and vertically overlapping the data line 13c, and a common electrode line (not shown in FIG.3a) connected to the common electrode 30 arc formed.
Step 77: by a seventh patterning process, a second insulating layer 40 is formed on the common electrode 30, a second insulating layer via hole 41 in the second insulating layer 40 is formed, and the second insulating layer via hole 41 is in communication with the first insulating layer via hole 21.
Step 78: by an eighth patterning process, a pixel electrode 50 is formed on the second insulating layer 40, so that the pixel electrode 50 is connected to the drain electrode 13b of the thin film transistor 10 through the first insulating layer via hole 21 and the second insulating layer via hole 41 respectively formed in the step 75 and the step 77.

The above steps are described by taking the example that the common electrode and the common electrode line are disposed in a same layer. Of course, the common electrode and the common electrode line may be in different layers. For example, the common electrode line may be formed simultaneously with the gate lines in the step 71, and in this case, the common electrode formed in the step 76 may be connected to the common electrode line through a via hole in the first insulating layer 20.

In the method of manufacturing the array substrate of the present embodiment, the first signal line, the second signal line, the first opening, the second opening, etc. in the array substrate may be referred to the related descriptions in the first embodiment to the fifth embodiment, and repeated descriptions are omitted herein.

## Claims

1. An array substrate, comprising:
a first signal line (71) extending along a first direction, wherein the first signal line (71) is a gate line (11a) or a data line (13c); and
a common electrode (30) arranged on the first signal line (71), wherein at least one first opening (31) is arranged in the common electrode (30) and overlaps an orthographic projection, on a plane where the common electrode (30) is located, of the first signal line (71); and the common electrode (30) comprises a first portion (30a) which partially overlaps the orthographic projection of the first signal line (71) and a second portion (30b) which is arranged outside the orthographic projection of the first signal line (71) and connected to the first portion (30a), and the second portion (30b) and the first portion (30a) are disposed in a same layer;
**characterized in that** the first opening (31) comprises at least one edge (311) extending along the first direction and the edge (311) is in a shape of zigzag line or a wavy line.

2. The array substrate of claim 1, wherein the first opening (31) is a closed opening.

3. The array substrate of claim 1 or 2, wherein a plurality of first openings (31) is arranged in the common electrode (30).

4. The array substrate of any one of claims 1 to 3, wherein a size, along the first direction, of the first opening (31) is smaller than or equal to a size, along a direction perpendicular to the first direction, of the first opening (31).

5. The array substrate of any one of claims 1 to 4 wherein the first opening (31) is axisymmetric with respect to the first signal line (71).

6. The array substrate of any one of claims 1 to 5, further comprising:
a second signal line (72) extending along a second direction which intersects the first direction,
wherein at least one second opening (32) is further arranged in the common electrode (30) and overlaps an orthographic projection, on the plane where the common electrode (30) is located, of the second signal line (72).

7. The array substrate of claim 6, wherein
the first signal line (71) is the gate line (11a) and the second signal line (72) is the data line (13c); or
the first signal line (71) is the data line (13c) and the second signal line (72) is the gate line (11a).

8. The array substrate of any one of claims 1 to 7, further comprising a pixel electrode (50),
wherein the pixel electrode (50) and the common electrode (30) are arranged in a same layer, the common electrode (30) comprises a plurality of strip common sub-electrodes (3a), and the pixel electrode (50) comprises a plurality of strip pixel sub-electrodes (5a) which are alternated with the strip common sub-electrodes (3a); or
the pixel electrode (50) and the common electrode (30) are arranged in different layers and the pixel electrode (50) is arranged on or below the common electrode (30).

9. The array substrate of any one of claims 1 to 8, further comprising:
a color filter layer (80), comprising a plurality of filter pattern columns, filter patterns (R/G/B) of each filter pattern column are arranged along the first direction, filter patterns (R/G/B) of a same filter pattern column are in a same color or in different colors, and, in two filter pattern columns which are arranged respectively at two sides of the first signal line (71), filter patterns (R/G/B) which are adjacent to the first signal line (71) and are respectively arranged at positions corresponding to each other are in different colors.

10. The array substrate of any one of claims 1 to 9, wherein the common electrode (30) further comprises a third portion (30c) which is arranged outside the orthographic projection of the first signal line (71) and connected to the first portion (30a), the third portion (30c) and the first portion (30a) are arranged in a same layer, and the third portion (30c) and the second portion (30b) are respectively arranged at opposite sides of the first portion (30a).

11. A display device, comprising the array substrate of any one of claims 1 to 8 10 and

12. The display device of claim 11, further comprising a color filter layer (80), wherein the color filter layer (80) comprises a plurality of filter pattern columns, filter patterns (R/G/B) of each filter pattern column are arranged along the first direction, filter patterns (R/G/B) of a same filter pattern column are in a same color or in different colors, and in two filter pattern columns which are arranged respectively at two sides of the first signal line (71), filter patterns (R/G/B) which are adjacent to the first signal line (71) and are respectively arranged at positions corresponding to each other are in different colors.

13. A manufacturing method of an array substrate, comprising:
forming a first signal line (71) extending along a first direction, wherein the first line is a gate line (11a) or a data line (13c); and
forming a common electrode (30) on the first signal line (71) and at least one first opening (31) in the common electrode (30) through one patterning process,
wherein the at least one first opening (31) overlaps an orthographic projection, on a plane where the common electrode (30) is located, of the first signal line (71); and the common electrode (30) comprises a first portion (30a) which partially overlaps the orthographic projection of the first signal line (71) and a second portion (30b) which is arranged outside the orthographic projection of the first signal line (71) and connected to the first portion (30a), and the second portion (30b) and the first portion (30a) are disposed in a same layer;
wherein the first opening (31) comprises at least one edge (311) extending along the first direction and the edge (311) is in a shape of zigzag line or a wavy line.

## Patentansprüche

1. Array-Substrat, umfassend:
eine erste Signalleitung (71), die sich entlang einer ersten Richtung erstreckt, wobei die erste Signalleitung (71) eine Gate-Leitung (11a) oder eine Datenleitung (13c) ist; und
eine gemeinsame Elektrode (30), die auf der ersten Signalleitung (71) angeordnet ist, wobei zumindest eine erste Öffnung (31) in der gemeinsamen Elektrode (30) angeordnet ist und auf einer Ebene, wo die gemeinsame Elektrode (30) lokalisiert ist, eine senkrechte Projektion der ersten Signalleitung (71) überlappt; und die gemeinsame Elektrode (30) umfasst einen ersten Bereich (30a), der die senkrechte Projektion der ersten Signalleitung (71) überlappt, und einen zweiten Bereich (30b), der außerhalb der senkrechten Projektion der ersten Signalleitung (71) angeordnet ist und an den ersten Bereich (30a) angeschlossen ist, und der zweite Bereich (30b) und der erste Bereich (30a) sind in einer gleichen Schicht angeordnet;
**dadurch gekennzeichnet, dass** die erste Öffnung (31) zumindest einen Rand (311) umfasst, der sich entlang der ersten Richtung erstreckt, und dass der Rand (311) in einer Form einer Zickzacklinie oder eine welligen Linie ist.

2. Array-Substrat gemäß Anspruch 1, wobei die erste Öffnung (31) eine geschlossene Öffnung ist.

3. Array-Substrat gemäß Anspruch 1 oder 2, wobei eine Mehrzahl von ersten Öffnungen (31) in der gemeinsamen Elektrode (30) angeordnet ist.

4. Array-Substrat gemäß einem der Ansprüche 1 bis 3, wobei eine Größe der ersten Öffnung (31) entlang der ersten Richtung kleiner als oder gleich zu einer Größe der ersten Öffnung (31) entlang einer Richtung senkrecht zu der ersten Richtung ist.

5. Array-Substrat gemäß einem der Ansprüche 1 bis 4, wobei die erste Öffnung (31) in Bezug auf die erste Signalleitung (71) achsensymmetrisch ist.

6. Array-Substrat gemäß einem der Ansprüche 1 bis 5, außerdem umfassend:
eine zweite Signalleitung (72), die sich entlang einer zweiten Richtung, welche die erste Richtung schneidet, erstreckt,
wobei zumindest eine zweite Öffnung (32) außerdem in der gemeinsamen Elektrode (30) angeordnet ist und auf der Ebene, wo die gemeinsame Elektrode (30) lokalisiert ist, eine senkrechte Projektion der zweiten Signalleitung (72) überlappt.

7. Array-Substrat gemäß Anspruch 6, wobei die erste Signalleitung (71) die Gate-Leitung (11a) ist und die zweite Signalleitung (72) die Datenleitung (13c) ist; oder
wobei die erste Signalleitung (71) die Datenleitung (13c) ist und die zweite Signalleitung (72) die Gate-Leitung (11a) ist.

8. Array-Substrat gemäß einem der Ansprüche 1 bis 7, außerdem umfassend eine Pixelelektrode (50),
wobei die Pixelelektrode (50) und die gemeinsame Elektrode (30) in einer gleichen Schicht angeordnet sind, wobei die gemeinsame Elektrode (30) eine Mehrzahl von Streifen-gemeinsame-Sub-Elektroden (3a) umfasst, und wobei die Pixelelektrode (50) eine Mehrzahl von Streifen-Pixel-Sub-Elektroden (5a) umfasst, welche sich mit den Streifen-gemeinsame-Sub-Elektroden (3a) abwechseln; oder
wobei die Pixelelektrode (50) und die gemeinsame Elektrode (30) in verschiedenen Schichten angeordnet sind und die Pixelelektrode (50) auf oder unter der gemeinsamen Elektrode (30) angeordnet ist.

9. Array-Substrat gemäß einem der Ansprüche 1 bis 8, außerdem umfassend:
eine Farbfilterschicht (80), umfassend eine Mehrzahl von Filtermusterspalten, wobei Filtermuster (R/G/B) von jeder Filtermusterspalte entlang einer ersten Richtung angeordnet sind, wobei Filtermuster (R/G/B) von einer gleichen Filtermusterspalte in einer gleichen Farbe oder in verschiedenen Farben sind, und wobei in zwei Filtermusterspalten, die jeweilig auf zwei Seiten der ersten Signalleitung (71) angeordnet sind, Filtermuster (R/G/B), die benachbart zu der ersten Signalleitung (71) angeordnet und jeweilig an zueinander korrespondierenden Positionen angeordnet sind, in verschiedenen Farben sind.

10. Array-Substrat gemäß einem der Ansprüche 1 bis 9, wobei die gemeinsame Elektrode (30) außerdem einen dritten Bereich (30c) umfasst, der außerhalb der senkrechten Projektion der ersten Signalleitung (71) angeordnet ist und an den ersten Bereich (30a) angeschlossen ist, wobei der dritte Bereich (30c) und der erste Bereich (30a) in einer gleichen Schicht angeordnet sind, und wobei der dritte Bereich (30c) und der zweite Bereich (30b) jeweilig an gegenüber liegenden Seiten des ersten Bereichs (30a) angeordnet sind.

11. Anzeigevorrichtung, umfassend das Array-Substrat gemäß einem der Ansprüche 1 bis 8 und 10.

12. Anzeigevorrichtung gemäß Anspruch 11, außerdem umfassend eine Farbfilterschicht (80), wobei die Farbfilterschicht (80) eine Mehrzahl von Filtermusterspalten umfasst, wobei Filtermuster (R/G/B) von jeder Filtermusterspalte entlang der ersten Richtung angeordnet sind, wobei Filtermuster (R/G/B) einer gleichen Filtermusterspalte in einer gleichen Farbe oder in verschiedenen Farben sind, und wobei in zwei Filtermustern, die jeweilig auf zwei Seiten der ersten Signalleitung (71) angeordnet sind, Filtermuster (R/G/B), die benachbart zu der ersten Signalleitung (71) sind und jeweilig an zueinander korrespondierenden Positionen angeordnet sind, in verschiedenen Farben sind.

13. Herstellungsverfahren eines Array-Substrats, umfassend:
Bilden einer ersten Signalleitung (71), die sich entlang einer ersten Richtung erstreckt, wobei die erste Leitung eine Gate-Leitung (11a) oder eine Datenleitung (13c) ist; und
Bilden einer gemeinsamen Elektrode (30) auf der ersten Signalleitung (71) und zumindest eine erste Öffnung (31) in der gemeinsamen Elektrode (30) durch einen Musterbildungsprozess,
wobei die zumindest eine erste Öffnung (31) auf einer Ebene, wo die gemeinsame Elektrode (30) lokalisiert ist, eine senkrechte Projektion der ersten Signalleitung (71) überlappt; und wobei die gemeinsame Elektrode (30) einen ersten Bereich (30a) umfasst, der die senkrechte Projektion der ersten Signalleitung (71) teilweise überlappt, und einen zweiten Bereich (30b), der außerhalb der senkrechten Projektion der ersten Signalleitung (71) angeordnet ist und an den ersten Bereich (30a) angeschlossen ist, und wobei der zweite Bereich (30b) und der erste Bereich (30a) in einer gleichen Schicht angeordnet sind;
wobei die erste Öffnung (31) zumindest einen Rand (311) umfasst, der sich entlang der ersten Richtung erstreckt, wobei der Rand (311) in einer Form einer Zickzacklinie oder einen welligen Linie ist.

## Revendications

1. Substrat de réseau, comprenant :
une première ligne de signal (71) s'étendant le long d'une première direction, dans lequel la première ligne de signal (71) est une ligne de porte (11a) ou une ligne de données (13c) ; et
une électrode commune (30) agencée sur la première ligne de signal (71), dans lequel au moins une première ouverture (31) est agencée dans l'électrode commune (30) et chevauche une projection orthographique, sur un plan où l'électrode commune (30) est située, de la première ligne de signal (71) ;
et l'électrode commune (30) comprend une première partie (30a) qui chevauche partiellement la projection orthographique de la première ligne de signal (71) et une deuxième partie (30b) qui est agencée en dehors de la projection orthographique de la première ligne de signal (71) et reliée à la première partie (30a), et la deuxième partie (30b) et la première partie (30a) sont disposées dans une même couche ;
**caractérisé en ce que** la première ouverture (31) comprend au moins un bord (311) s'étendant le long de la première direction et le bord (311) a une forme de ligne en zigzag ou ondulée.

2. Substrat de réseau selon la revendication 1, dans lequel la première ouverture (31) est une ouverture fermée.

3. Substrat de réseau selon la revendication 1 ou 2, dans lequel une pluralité de premières ouvertures (31) est agencée dans l'électrode commune (30).

4. Substrat de réseau selon l'une quelconque des revendications 1 à 3, dans lequel une taille, le long de la première direction, de la première ouverture (31) est plus petite ou égale à une taille, le long d'une direction perpendiculaire à la première direction, de la première ouverture (31).

5. Substrat de réseau selon l'une quelconque des revendications 1 à 4, dans lequel la première ouverture (31) est axisymétrique par rapport à la première ligne de signal (71).

6. Substrat de réseau selon l'une quelconque des revendications 1 à 5, comprenant en outre :
une seconde ligne de signal (72) s'étendant le long d'une seconde direction qui coupe la première direction,
dans lequel au moins une seconde ouverture (32) est en outre agencée dans l'électrode commune (30) et chevauche une projection orthographique, sur le plan où l'électrode commune (30) est située, de la seconde ligne de signal (72).

7. Substrat de réseau selon la revendication 6, dans lequel
la première ligne de signal (71) est la ligne de porte (11a) et la seconde ligne de signal (72) est la ligne de données (13c) ; ou
la première ligne de signal (71) est la ligne de données (13c) et la seconde ligne de signal (72) est la ligne de porte (11a).

8. Substrat de réseau selon l'une quelconque des revendications 1 à 7, comprenant en outre une électrode de pixel (50) :
dans lequel l'électrode de pixel (50) et l'électrode commune (30) sont agencées dans une même couche, l'électrode commune (30) comprend une pluralité de sous-électrodes communes en feuillard (3a), et l'électrode de pixel (50) comprend une pluralité de sous-électrodes de pixel en feuillard (5a) qui alternent avec les sous-électrodes communes en feuillard (3a) ; ou
l'électrode de pixel (50) et l'électrode commune (30) sont agencées en différentes couches et l'électrode de pixel (50) est agencée sur ou en-dessous de l'électrode commune (30).

9. Substrat de réseau selon l'une quelconque des revendications 1 à 8, comprenant en outre :
une couche de filtres colorés (80), comprenant une pluralité de colonnes de matrices de filtre, des matrices de filtre (R/G/B) de chaque colonne de matrices de filtre sont agencées le long de la première direction, des matrices de filtre (R/G/B) d'une même colonne de matrices de filtre sont de même couleur ou de couleurs différentes, et, dans deux colonnes de matrices de filtre qui sont agencées respectivement sur deux côtés de la première ligne de signal (71), des matrices de filtre (R/G/B) qui sont adjacentes à la première ligne de signal (71) et sont respectivement agencées à des positions correspondant l'une à l'autre sont de différentes couleurs.

10. Substrat de réseau selon l'une quelconque des revendications 1 à 9, dans lequel l'électrode commune (30) comprend en outre une troisième partie (30c) qui est agencée en dehors de la projection orthographique de la première ligne de signal (71) et connectée à la première partie (30a), la troisième partie (30c) et la première partie (30a) sont agencées dans la même couche, et la troisième partie (30c) et la deuxième partie (30b) sont respectivement agencées sur des côtés opposés de la première partie (30a).

11. Dispositif d'affichage, comprenant le substrat de réseau selon l'une quelconque des revendications 1 à 8 et 10.

12. Dispositif d'affichage selon la revendication 11, comprenant en outre une couche de filtres colorés (80), dans lequel la couche de filtres colorés (80) comprend une pluralité de colonnes de matrices de filtre, des matrices de filtre (R/G/B) de chaque colonne de matrices de filtre sont agencées le long de la première direction, des matrices de filtre (R/G/B) d'une même colonne de matrices de filtre sont de même couleur ou de couleurs différentes, et, dans deux colonnes de matrices de filtre qui sont agencées respectivement sur deux côtés de la première ligne de signal (71), des matrices de filtre (R/G/B) qui sont adjacentes à la première ligne de signal (71) et sont respectivement agencées à des positions correspondant l'une à l'autre sont de différentes couleurs.

13. Procédé de fabrication d'un substrat de réseau, comprenant :
de former une première ligne de signal (71) s'étendant le long d'une première direction, dans lequel la première ligne de signal (71) est une ligne de porte (11a) ou une ligne de données (13c) ; et
de former une électrode commune (30) sur la première ligne de signal (71) et au moins une première ouverture (31) dans l'électrode commune (30) par un procédé de matriçage,
dans lequel l'au moins une première ouverture (31) chevauche une projection orthographique, sur un plan où l'électrode commune (30) est située, de la première ligne de signal (71) ; et l'électrode commune (30) comprend une première partie (30a) qui chevauche partiellement la projection orthographique de la première ligne de signal (71) et une deuxième partie (30b) qui est agencée en dehors de la projection orthographique de la première ligne de signal (71) et reliée à la première partie (30a), et la deuxième partie (30b) et la première partie (30a) sont disposées dans une même couche ;
dans lequel la première ouverture (31) comprend au moins un bord (311) s'étendant le long de la première direction et le bord (311) a une forme de ligne en zigzag ou ondulée.
